Europäisches Patentamt

European Patent Office

Office européen des brevets

(11) Veröffentlichungsnummer : **0 075 682**
**B1**

(12) **EUROPÄISCHE PATENTSCHRIFT**

(45) Veröffentlichungstag der Patentschrift :
15.05.85

(51) Int. Cl.⁴ : **C 09 D   5/08**

(21) Anmeldenummer : **82107118.0**

(22) Anmeldetag : **06.08.82**

(54) **Beschichtungsstoff für Korrosionsschutzzwecke.**

(30) Priorität : **10.09.81 DE 3135849**

(43) Veröffentlichungstag der Anmeldung :
**06.04.83 Patentblatt 83/14**

(45) Bekanntmachung des Hinweises auf die Patenterteilung : **15.05.85 Patentblatt 85/20**

(84) Benannte Vertragsstaaten :
**AT BE CH DE FR GB IT LI NL**

(56) Entgegenhaltungen :
**EP-A- 0 035 316**
**US-A- 4 049 596**

(73) Patentinhaber : **Dr. Schumacher GmbH. & Co. KG.**
**Körnebachstrasse 100**
**D-4600 Dortmund (DE)**

(72) Erfinder : **Blumentritt, Friedrich**
**Unterer Ahlenbergweg 75**
**D-5804 Herdecke (DE)**
Erfinder : **Heuser, Wilfried, Dr. Dipl.-Chem.**
**Hobeuken 30**
**D-4322 Sprockhövel (DE)** ·

(74) Vertreter : **Dörner, Lothar, Dipl.-Ing.**
**Stresemannstrasse 15**
**D-5800 Hagen (DE)**

**Beschreibung**

Die Erfindung betrifft einen Beschichtungsstoff für Korrosionsschutzzwecke auf Basis wäßriger Emulsionen und/oder Dispersionen und/oder Lösungen filmbildender Bindemittel, in die Pigmente eingerührt sind, sowie ein Verfahren zu seiner Herstellung.

Es ist bekannt, Beschichtungsstoffe auf wäßriger Basis zum Schutz von Stahl und Nichteisenmetallen, wie Zink und Aluminium, einzusetzen. Soweit es sich um Beschichtungsstoffe für Korrosionsschutzzwecke handelt, zeichnen sich diese jedoch dadurch aus, daß eine vor Korrosion schützende Wirkung nur durch die Mitverwendung gut färbender Korrosionsschutzpigmente, wie Zinkchromat, Strontiumchromat u. a., erreicht wird und/oder die Trockenschichtdicken deutlich über 40 μm liegen und/oder erhebliche Anteile organischer Lösungsmittel zur geschlossenen Filmbildung mit verwendet werden. Der Einsatz oft größerer Mengen organischer und somit brennbarer Lösungsmittel ergibt sich häufig auch aus der Notwendigkeit, trotz Verwendung von Wasser vertretbare Trockenzeiten zu erreichen. — Die Verdunstungsgeschwindigkeit im Vergleich zu den gebräuchlichen Lösungsmittel Xylol oder Äthylacetat liegt um die Faktoren 6 bzw. 26 höher. — Die Herstellung herkömmlicher wäßriger Beschichtungsstoffe für Korrosionsschutzzwecke erfolgt in der Art, daß käufliche pulvrige Pigmente in als Bindemittel fungierende Emulsionen und/oder Dispersionen und/oder Harze eingerührt werden. Um die zwangsläufig vorhandenen Pigmentagglomerate zu zerstören und so eine optimale Verteilung der Partikel zu erreichen, erfolgt eine Nachbehandlung mit Dissolvern, Walzen, Sand-, Perl- oder Kugelmühlen. Die erhaltenen Beschichtungsstoffe zeigen jedoch nach dem Auftrocknen bei Trockenschichtdicken von 20 bis 40 μm im Vergleich zu Beschichtungsstoffen, die auf der Basis ausschließlich organischer Lösungsmittel hergestellt sind, sehr schlechte Korrosionsschutzeigenschaften.

Für die Bewertung der Korrosionsschutzeigenschaften wurden zwei in der Branche übliche Kurzbewitterungstestverfahren herangezogen, und zwar der Salzsprühtest nach DIN 50021 und der Schwitzwasserwechseltest nach DIN 50017. Als Testschichtdicke wurden 25 μm festgelegt ; die aus den Beschichtungsstoffen resultierenden Filme sollen auf dekapiertem Blech im Salzsprühtest 6 Tage und im Schwitzwasserwechseltest 25 Tage ihre Schutzwirkung so erfüllen, daß keine Blasen und Korrosionen auftreten. Die nach dem Zusammengeben von Pigmenten und wäßrigen Bindemitteln in der vorgenannten Art erhaltenen transparenten Beschichtungsstoffe erfülltem bei weitem diese Bedingungen nicht. Hierfür müssen im wesentlichen die in den aus den Beschichtungsstoffen entstandenen Filmen auftrenden Mikroporen verantwortlich gemacht werden. Diese Mikroporen treten massiert an der Grenzfläche der Pigment-/Bindemittelpartikel auf. Sie erklären sich unter anderem aus der Tatsache, daß die Verfilmung beim Trocknungsprozeß, bedingt durch die unterschiedlichen oberflächenwirksamen Kräfte der anorganischen Pigmentteilchen einerseits und der nach dem Verdunsten des Wassers zurückbleibenden organischen Bindemitteltröpfchen andererseits, teilweise gestört ist.

Die Erfindung bezweckt, das geschilderte negative Verhalten von wäßrigen Beschichtungsstoffen für Korrosionsschutzzwecke zu beseitigen. Ihr liegt die Aufgabe zugrunde, bei einem Anteil organischer Lösungsmittel unter 5 % einen transparenten Beschichtungsstoff mit einem verbesserten Korrosionsschutzverhalten der aus den Beschichtungsstoffen resultierenden Filme zu erhalten. Dabei geht die Erfindung allgemein von der Erkenntnis aus, daß die Oberflächen der anorganischen Pigmentpartikel dahingehend verändert werden müssen, daß beim Trocknungsprozeß das störungsfreie Vereinigen der Bindemittelteilchen mit den Pigmentteilchen gegeben ist. Gemäß der Erfindung wird die gestellte Aufgabe gelöst durch ein anorganisches Pigmentgemisch aus die Trocknungsgeschwindigkeit erhöhenden transparent wirkenden Verbindungen und aus den Korrosionsschutz herbeiführenden transparent wirkenden Verbindungen, in dem die Pigmente mit einer organischen Umhüllung versehen sind.

Der Beschichtungsstoff nach der Erfindung erfüllt folgende Bedingungen : Der Einsatz bestimmter nachbehandelter Pigmente bzw. Pigmentgemische ermöglicht Korrosionsschutzwerte bei Trockenschichtdicken von 25 bis 30 μm, die sonst nur bei wäßrigen Beschichtungsstoffen herkömmlicher Art mit wesentlich höheren Schichtdicken erzielbar sind. Durch die Art und Menge der Pigmentkombinationen wird eine « pigmentgeförderte » Trocknung erreicht, ohne daß die als Vorgabe geforderte Transparenz verlorengeht und ohne daß nennenswerte Mengen organischer Lösungsmittel Anwendung finden. Volle Wasserlöslichkeit ist gegeben. Der Flammpunkt liegt über 100 °C.

Bei allen Versuchen und Tests zeigte sich, daß die beim Verfilmen (Trocknen) auftretenden Wechselwirkungen zwischen den organischen Bindemittelteilchen und den mit einer organischen Hülle überzogenen anorganischen Pigmentpartikeln so günstig beeinflußt wurden, daß die Anzahl der Mikroporen deutlich abnahm. Hieraus erklären sich die bei Korrosionsschutztests erreichten bis um den Faktor 4 besseren Ergebnisse.

Bei der Herstellung des Beschichtungsstoffs nach der Erfindung wird das anorganische Pigmentgemisch mit einem Anteil über 50 % aus den transparent wirkenden Verbindungen zur Erhöhung der Trocknungsgeschwindigkeit und mit einem Anteil unter 50 % aus den transparent wirkenden Verbindungen zur Erzielung des Korrosionsschutzes hergestellt. Vor seinem Einrühren in die Bindemittel wird das Pigmentgemisch mit flüssigen Stoffen vorbehandelt, sodaß die Pigmente die organische Umhüllung erhalten. Zum Umhüllen der Pigmente werden Stoffe verwendet, die bei Raumtemperatur flüssig sind, durch Zugabe von Lösungsmitteln flüssig gemacht und/oder durch Wärme (Reibungswärme und/oder externe Beheizung) flüssig werden.

2

In Ausgestaltung der Erfindung macht der Anteil der mit einer Umhüllung versehenen Pigmente zwischen 5 und 50 % des Gewichts des Beschichtungsstoffes aus. Die Pigmente erhalten bei der organischen Umhüllung einen Überzug aus flüssigen Stoffen, der zwischen 10 und 250 Gewichtsprozenten liegt.

Als geeignete Stoffe zum Umhüllen der Pigmente wurden Ester von anorganischen Säuren bzw. von Di- und Polycarbonsäuren mit ein- und mehrwertigen Alkoholen sowie chlorierte Paraffine gefunden. Das erklärt sich einmal aus den bekannt guten Benetzungsfähigkeiten der Pigmente, z. B. mit Leinöl, zum anderen daraus, daß die genannten Stoffe bei richtiger Mengenwahl sehr gut von den wäßrigen Bindemitteln aufgenommen werden, was auch Grundvoraussetzung für das oben beschriebene positive Verhalten der umhüllten Pigmentteilchen ist.

Ein transparent auftrocknender Beschichtungsstoff auf wäßriger Basis ist am einfachsten zu realisieren, wenn auf die Mitverwendung von Pigmenten im Beschichtungsstoff verzichtet wird. Solche nur aus wäßrigen Bindemitteln auftrocknenden Beschichtungsfilme zeigen keine Korrosionsschutzwirkung, die den der Erfindung zugrunde liegenden Forderungen gerecht wird. Die Auswahl der richtigen Korrosionsschutz-Pigmente ist demnach unabhängig von der oben beschriebenen Nachbehandlung für die korrosionsschützende Wirkung von wesentlicher Bedeutung. Aufgrund der noch ausführlich erläuterten Transparenz kamen stärker gefärbte bzw. stärker färbende typische typische Korrosionsschutzpigmente wie Zinkchromat, Strontiumchromat, nicht in Betracht. Es zeigte sich jedoch, daß mit anderen Verbindungen auf der Basis von Barium, Zink, Strontium, Magnesium, Calcium, wie Bariumphosphat, Zinkphosphat, Magnesiumphosphat, Bariummetaphosphat, Bariummetaborat u. a. die gesteckten Ziele hinsichtlich der Korrosionsschutzprüfungen, verbunden mit den übrigen Merkmalen der Erfindung, erreicht wurden.

Als Transparenz wurde eine Obergrenze der Schichtdicke definiert, bei der die Konturen eines Schwarz-Weiß-Rasters auf dem Untergrund gut sichtbar sind, der durch den auf dem Beschichtungsstoff hergestellten Film abgedeckt ist. Transparenz im Sinne dieser Definition soll bei den Beschichtungsstoffen bis 50 μm Trockenschichtdicke gegeben sein.

Trotz der Beschränkung des Pigmenteinsatzes war eine weitere Bedingung die schnelle Trocknung des Beschichtungsstoffes, die folgendermaßen festgelegt wurde : Der Beschichtungsstoff muß bei einer forcierten Wärmetrocknung mit Luft der Luftgeschwindigkeit 1,5 m/sec. und einer Lufttemperatur von 35 °C, maximal 45 °C, innerhalb von 30 sec. bei einer Trockenschichtdicke zwischen 25 und 30 my trocknen. Diese Trocknungsbedingungen könnten bei wäßrigen Beschichtungsstoffen durch die Mitverwendung schnelltrocknender organischer Lösungsmittel (z. B. Alkohol) in der Größenordnung von deutlich über 5 % erreicht werden. Da jedoch schnellverdunstende organische Lösungsmittel in der Dampfphase brennbare und ggf. sogar explosive Gemische bilden können, ist bei dem Beschichtungsstoff nach der Erfindung auf deren Mitverwendung verzichtet und nur der Einsatz ggf. eines schwerflüchtigen Lösungsmittels, bei dem der sehr hohe Flammpunkt und die untere Explosionsgrenze keine Gefährdung erwarten lassen, bis zu höchstens 5 Gewichtsprozent erlaubt. Es mußten daher durch den Einsatz anderer ungefährlicher Stoffe die Trocknungsbedingungen erreicht werden. Durch den Einsatz von Feststoffen in der Form von die Trocknungsgeschwindigkeit erhöhenden Pigmenten, ist beim Trocknungsvorgang des Beschichtungsstoffs in dem Film ein « Gerüst » an Feststoffen geschaffen, in dem Hohlräume verteilt sind. Die Packungsdichte ist so gesteuert, daß in den entstehenden Hohlräumen so viel wäßriges Bindemittel untergebracht werden kann, daß dadurch die wäßrige Schicht an der Oberfläche gering ist. Nach dem Abtrocknen des Oberflächenwassers werden bei genügender Stabilität des Pigmentgerüsts eine bedingungsgemäße Trocknung nach DIN 53150 Grad 5 erreicht.

Der so trockene Film weist zwar im Gerüstinnern noch Wasser auf ; dieses hat jedoch keinen Einfluß auf die Trockengradbestimmung. (Die Trockengradbestimmung nach DIN 53150 beruht auf dem Prinzip, daß eine Anstrichfilmoberfläche mit einem Papier bedeckt und diese je nach Trockengradvorgabe mit verschiedenen Gewichtsstücken belastet wird. Das Papier darf bei erfolgter Oberflächentrocknung nicht kleben bleiben). Das Problem bei der Auswahl der Pigmentkombinationen war die außerdem gestellte Forderung der Transparenz. Es können aus diesem Grunde nur solche Feststoffe in Frage kommen, die dank ihrer Brechungsindizes, ihrer Korngrößenverteilung und ihrer Benetzbarkeit eine Transparenz ermöglichen.

Ein Schritt der Erfindung beruht demnach darauf, daß transparente Pigmentkombinationen gefunden wurden, die das beschriebene « Gerüst » beim Trocknen des Beschichtungsstoffes in der Art bilden, daß eine pigmentbedingte schnelle Trocknung auftritt, ohne daß eine Mitverwendung schnellverdunstender organischer Lösungsmittel erforderlich ist. Bei den Pigmenten handelt es sich in Ausgestaltung der Erfindung um Kombinationen von Verbindungen auf Basis von Silikaten, wie Talkum, Glimmer, Carbonaten, wie Dolomit, Kreide, Sulfaten, wie Bariumsulfat, Calciumsulfat, sowie Siliciumdioxid mit einer mittleren Teilchengröße zwischen 3 und 8 μm. Diese Pigmentkombinationen stellen den Hauptteil des Gesamtpigments dar.

Eine Begünstigung der Stabilität des diskutierten Gerüstes ergibt sich durch die erfidungsgemäß werwendete organische Umhüllung und somit eine größere Wasseraufnahme, was bei der Trockengradbestimmung zu weiter verkürzten Trockenzeiten führt. Messungen der Trocknungszeiten bei Beschichtungsstoffen, die die gleichen Pigmentkombinationen ohne Umhüllungen beinhalteten, ergaben bis zu 20 % höhere Werte im Vergleich zu den erfindungsgemäß hergestellten Beschichtungsstoffen.

Der Beschichtungsstoff nach der Erfindung kann nach allen in der Branche üblichen Applikationsmethoden aufgebracht werden. Der Beschichtungsstoff ist hinsichtlich seines Korrosionsschutzverhaltens hervorragend für Stahl geeignet. Seine Verwendung als transparente Beschichtung auf Nichteisenmetallen ist ohne weiteres möglich.

Die Erfindung, die darin besteht, daß durch Umhüllen von transparenten, anorganischen Pigmenten mit organischen flüssigen Stoffen die daraus hergestellten Beschichtungsstoffe beim Trocknen eine geschlossener Filmstruktur und einen stark verbesserten Korrosionsschutz aufweisen, hat keine Parallelen zu Verfahrensweisen, wo z. B. einem schon fertigen wäßrigen Beschichtungsstoff zwecks Farbgebung ein Pigmentkonzentrat zugegeben wird.

Abschließend werden noch Beispiele für drei Beschichtungsstoffe und deren Herstellung beschrieben :

Der Beschichtungsstoff 1 ist zusammengesetzt aus

50 T wasserlösliches Alkydharz (50 %ig in Wasser)
2 T Hilfsmittel (z. B. Trockenstoffe, Schwebemittel)
8 T entionisiertes Wasser
40 T nachbehandeltes Pigmentgemisch 1,

wobei das nachbehandelte Pigmentgemisch 1 wie folgt zusammengesetzt ist :

50 T Bariumsulfat
7 T Glimmer
14 T Bariummetaphosphat
29 T Leinöl.

Das Pigmentgemisch 1 wird wie folgt hergestellt : In einem mit Rührwerk versehenen Mischer werden die Pigmente Bariumsulfat und Bariummetaphosphat bewegt (Umdrehungszahl : 900 U/min. ; Leistung 40 KW). Nach 15 Minuten erfolgt die portionsweise Zugabe von Leinöl. Nach 3 Stunden ist der Umhüllungsprozeß abgeschlossen. Zum Zerschlagen der Agglomerate wird das so hergestellte Pigmentgemisch 12 Stunden in einer Kugelmühle behandelt und kann anschließend zur Herstellung des Beschichtungsstoffes 1 eingesetzt werden.

Der Beschichtungsstoff 2 ist zusammengesetzt aus

60 T wasseremulgierbares Harz (70 %ig in Wasser)
4 T organisches Lösungsmittel (z. B. Proponal-2)
2 T Hilfsstoffe (z. B. Schwebemittel)
10 T entionisiertes Wasser
24 T nachbehandeltes Pigmentgemisch 2,

wobei das nachbehandelte Pigmentgemisch 2 wie folgt zusammengesetzt ist :

22 T Glimmer
4 T Calciumcarbonat (Calcit-Typ)
14 T Zinkphosphat
60 T Phthalsäurebutylester.

Die Herstellung des Beschichtungsstoffes 2 erfolgt analog der Herstellung des Beschichtungsstoffes 1, jedoch ist der Umhüllungsprozeß mit gutem Ergebnis erst mit einer Rührzeit von 7 Stunden abgeschlossen.

Der Beschichtungsstoff 3 ist zusammengesetzt aus

40 T Styrol-Acrylat-Dispersion (50 %ig in Wasser)
2 T Hilfsstoffe (z. B. Schwebemittel)
10 T entionisiertes Wasser
48 T nachbehandeltes Pigmentgemisch 3,

wobei das nachbehandelte Pigmentgemisch 3 wie folgt zusammengesetzt ist :

14 T Bariumsulfat
50 T Quarzmehl
8 T Bariummetaphosphat
18 T chloriertes Paraffin
10 T organisches Lösungsmittel (z. B. Xylol).

Das Pigmentgemisch 3 wird wie folgt hergestellt : In einem beheizbaren, geschlossenen, mit Rührwerk versehenen Behälter mit Destilliermöglichkeit werden die Pigmente vorgelegt. Das mit Xylol versetzte chlorierte Paraffin wird unter Rühren dem Pigmentgemisch zugesetzt und das Ganze bei 80 °C unter Rückfluß 8 Stunden gerührt. Nach dieser Zeit erfolgt das weitgehende Abdestillieren des Xylols. Sobald ca. 80 % des Xylols das Reaktionsgefäß verlassen haben, wird das Restlösungsmittel durch Behandlung über 12 Stunden bei 80 °C in einer Wärmekammer beseitigt.

Abschließend erfolgt wieder eine Behandlung in einer Kugelmühle, um die entstandenen Pigmentagglomerate zu zerschlagen.

**Patentansprüche**

1. Beschichtungsstoff für Korrosionsschutzzwecke auf Basis wäßriger Emulsionen und/oder Dispersionen und/oder Lösungen filmfildender Bindemittel, in die Pigmente eingerührt sind, gekennzeichnet durch ein anorganisches Pigmentgemisch aus die Trocknungsgeschwindigkeit erhöhenden, transparent wirkenden Verbindungen und aus den Korrosionsschutz herbeiführenden, transparent wirkenden Verbindungen, in dem die Pigmente vor dem Einbringen in das Bindemittel mit einer organischen Umhüllung versehen sind.

2. Beschichtungsstoff nach Anspruch 1, dadurch gekennzeichnet, daß der Anteil der mit einer Umhüllung versehenen Pigmente zwischen 5 und 50 % des Gewichts des Beschichtungsstoffs ausmacht.

3. Beschichtungsstoff nach Anspruch 1 oder 2, dadurch gekennzeichnet, daß die Pigmente bei der organischen Umhüllung einen Überzug aus flüssigen Stoffen erhalten, der zwischen 10 und 250 Gewichtsprozenten liegt.

4. Beschichtungsstoff nach einem der Ansprüche 1 bis 3, dadurch gekennzeichnet, daß als flüssige Stoffe zum Umhüllen der Pigmente Ester von anorganischen Säuren bzw. von Di- und Poly-Carbonsäuren mit ein- und mehrwertigen Alkoholen und chlorierte Paraffine verwendet sind.

5. Beschichtungsstoff nach einem der Ansprüche 1 bis 4, dadurch gekennzeichnet, daß als Pigmente zur Erhöhung der Trocknungsgeschwindigkeit transparent wirkende Verbindungen auf Basis von Silikaten, wie Talkum, Glimmer, Carbonaten, wie Dolomit, Kreide, Sulfaten, wie Bariumsulfat, Calciumsulfat, sowie Siliciumdioxid mit einer mittleren Teilchengröße zwischen 3 und 8 μm verwendet sind.

6. Beschichtungsstoff nach einem der Ansprüche 1 bis 5, dadurch gekennzeichnet, daß als Pigmente zur Erzielung des Korrosionsschutzes transparent wirkende Verbindungen des Zinks, Bariums, Strontiums, Calciums und Magnesiums, wie Bariumphosphat, Magnesiumphosphat, Zinkphosphat, Bariummetaphosphat, Bariummetaborat verwendet sind.

7. Beschichtungsstoff nach einem der Ansprüche 1 bis 6, gekennzeichnet durch folgende Zusammensetzung :

    50 T wasserlösliches Alkydharz (50 %ig in Wasser)
     2 T Hilfsmittel (z. B. Trockenstoffe, Schwebemittel)
     8 T entionisiertes Wasser
    40 T nachbehandeltes Pigmentgemisch 1,

wobei das nachbehandelte Pigmentgemisch 1 aus

    50 T Bariumsulfat
     7 T Glimmer
    14 T Bariummetaphosphat
    29 T Leinöl

besteht.

8. Beschichtungsstoff nach einem der Ansprüche 1 bis 6, gekennzeichnet durch folgende Zusammensetzung :

    60 T wasseremulgierbares Harz (70 %ig in Wasser)
     4 T organisches Lösungsmittel (z. B. Proponal-2)
     2 T Hilfsstoffe (z. B. Schwebemittel)
    10 T entionisiertes Wasser
    24 T nachbehandeltes Pigmentgemisch 2,

wobei das nachbehandelte Pigmentgemisch 2 aus

    22 T Glimmer
     4 T Calciumcarbonat (Calcit-Typ)
    14 T Zinkphosphat
    60 T Phthalsäurebutylester

besteht.

0 075 682

9. Beschichtungsstoff nach einem der Ansprüche 1 bis 6, gekennzeichnet durch folgende Zusammensetzung :

40 T Styrol-Acrylat-Dispersion (50 %ig in Wasser)
2 T Hilfsstoffe (z. B. Schwebemittel)
10 T entionisiertes Wasser
48 T nachbehandeltes Pigmentgemisch 3,

wobei das nachbehandelte Pigmentgemisch 3 aus

14 T Bariumsulfat
50 T Quarzmehl
8 T Bariummetaphosphat
18 T chloriertes Paraffin
10 T organisches Lösungsmittel (z. B. Xylol)

besteht.

10. Verwendung des Beschichtungsstoffes nach einem der Ansprüche 1 bis 9 als transparente, korrosionsschützende und schnell trocknende Beschichtung auf Stahl.

11. Verwendung des Beschichtungsstoffes nach einem der Ansprüche 1 bis 9 als transparente, korrosionsschützende und schnell trocknende Beschichtung auf Nichteisenmetallen, wie Zink und Aluminium.

12. Verfahren zur Herstellung von Beschichtungsstoffen auf wäßriger Basis für Korrosionsschutzzwecke, bei dem Pigmente in als filmbildende Bindemittel wirkende Emulsionen und/oder Dispersionen und/oder Lösungen eingerührt werden, dadurch gekennzeichnet, daß ein anorganisches Pigmentgemisch mit einem Anteil über 50 % aus transparent wirkenden Verbindungen zur Erhöhung der Trocknungsgeschwindigkeit und mit einem Anteil unter 50 % aus transparent wirkenden Verbindungen zur Erzielung des Korrosionsschutzes hergestellt wird und vor seinem Einrühren in die Bindemittel mit flüssigen Stoffen vorbehandelt wird so, daß die Pigmente eine organische Umhüllung erhalten.

13. Verfahren nach Anspruch 12, dadurch gekennzeichnet, daß zum Umhüllen der Pigmente Stoffe verwendet werden, die bei Raumtemperatur flüssig sind, durch Zugabe von Lösungsmitteln flüssig gemacht und/oder durch Wärme flüssig werden.

**Claims**

1. Coating material for corrosion protection purposes based on aqueous emulsions and/or dispersions and/or solutions of film-forming binding agents into which pigments are stirred, characterised by an inorganic pigment mixture of transparent-acting compounds increasing the speed of drying and of transparent-acting compounds bringing about the corrosion protection in which the pigments, before introduction into the binding agent, are provided with an organic covering.

2. Coating material according to claim 1, characterised in that the proportion of the pigments provided with a coating account for between 5 and 50 % of the weight of the coating material.

3. Coating material according to claim 1 or 2, characterised in that the pigments, in the case of the organic coating, receive a coating of liquid materials which lies between 10 and 250 weight percent.

4. Coating material according to one of claims 1 to 3, characterised in that, as liquid materials for the coating of the pigments, there are used esters of inorganic acids or of di- and polycarboxylic acids with mono- or polyhydroxy alcohols and chlorinated paraffins.

5. Coating material according to one of claims 1 to 4, characterised in that, as pigments for the increasing of the drying speed, there are used transparent-acting compounds based on silicates, such as talc, mica ; carbonates, such as dolomite, chalk ; sulphates, such as barium sulphate, calcium sulphate ; as well as silicon dioxide, with an average particle size between 3 and 8 μm.

6. Coating material according to one of claims 1 to 5, characterised in that, as pigments for the achievement of the corrosion protection, there are used transparent-acting compounds of zinc, barium, strontium, calcium and magnesium, such as barium phosphate, magnesium phosphate, zinc phosphate, barium metaphosphate, barium metaborate.

7. Coating material according to one of claims 1 to 6, characterised by the following composition :

50 parts water-soluble alkyd resin (50 % in water)
2 parts adjuvants (e. g. drying substances, suspension agents)
8 parts deionised water
40 parts after-treated pigment mixture 1,

whereby the after-treated pigment mixture 1 consists of

50 parts barium sulphate
7 parts mica

6

14 parts barium metaphosphate
29 parts linseed oil.

8. Coating material according to one of claims 1 to 6, characterised by the following composition :

60 parts water-emulsified resin (70 % in water)
 4 parts organic solvent (e. g. propanol-2)
 2 parts adjuvants (e. g. suspension agents)
10 parts deionised water
24 parts after-treated pigment mixture 2

whereby the after-treated pigment mixture 2 consists of

22 parts mica
 4 parts calcium carbonate (calcite type)
14 parts zinc phosphate
60 parts phthalic acid butyl ester.

9. Coating material according to one of claims 1 to 6, characterised by the following composition :

40 parts styrene-acrylate dispersion (50 % in water)
 2 parts adjuvants (e. g. suspension agents)
10 parts deionised water
48 parts after-treated pigment mixture 3,

whereby the after-treated pigment mixture 3 consists of

14 parts barium sulphate
50 parts powdered quartz
 8 parts barium metaphosphate
18 parts chlorinated paraffin
10 parts organic solvent (e. g. xylene).

10. Use of the coating material according to one of claims 1 to 9 as transparent, corrosion-protecting and rapidly drying coating on steel.

11. Use of the coating material according to one of claims 1 to 9 as transparent, corrosion-protecting and rapidly drying coating on non-ferrous metals, such as zinc and aluminium.

12. Process for the production of coating materials with an aqueous basis for corrosion protection purposes, in which pigments are stirred into emulsions and/or dispersions and/or solutions acting as film-forming material, characterised in that an inorganic pigment mixture with a propotion of more than 50 % of transparent-acting compounds for the increasing of the drying rate and with a proportion of less than 50 % of transparent-acting compounds for the achievement of the corrosion protection is produced and, before its stirring into the binding agent, is pretreated with liquid materials so that the pigments receive an organic coating.

13. Process according to claim 12, characterised in that, for the coating of the pigments, substances are used which are liquid at room temperature, are made liquid by the addition of solvents and/or are made liquid by heating.

**Revendications**

1. Enduit anticorrosif à base d'émulsions, de dispersions ou de solutions aqueuses de liants filmogènes, dans lesquelles sont dispersés les pigments, caractérisé par un mélange de pigments minéral constitué de deux types de composés activant la transparence, dont le premier accélère la vitesse de séchage et le second assure la protection anticorrosion, les pigments inclus dans ce mélange étant munis d'un enrobage organique avant leur dispersion dans le liant.

2. Enduit selon la revendication 1, caractérisé en ce que le pourcentage de pigments enrobés représente 5 à 50 % du poids de l'enduit.

3. Enduit selon une des revendications 1 et 2, caractérisé en ce que les pigments reçoivent au cours de l'enrobage organique un revêtement de substances liquides, qui se situe entre 10 et 250 % poids.

4. Enduit selon une quelconque des revendications 1 à 3, caractérisé en ce que les substances liquides utilisées pour l'enrobage des pigments sont des esters d'acides minéraux ou d'acides di- et polycarboxyliques avec des alcools mono- et polyvalents, ainsi que des paraffines chlorurées.

5. Enduit selon une quelconque des revendications 1 à 4, caractérisé en ce que les pigments utilisés pour accélérer la vitesse de séchage sont des composés activant la transparence à base de silicates, tels que talc, mica, de carbonates, tels que dolomite, craie, de sulfates, tels que sulfate de baryum, sulfate de calcium, ainsi que de la silice d'une granulométrie moyenne comprise entre 3 et 8 m.

6. Enduit selon une quelconque des revendications 1 à 5, caractérisé en ce que les pigments utilisés pour garantir la protection anticorrosive sont des composés du zinc, baryum, strontium, calcium et magnésium activant la transparence, tels que phosphate de baryum, phosphate de magnésium, phosphate de zinc, métaphosphate de baryum et métaborate de baryum.

7. Enduit selon une quelconque des revendications 1 à 6, caractérisé par la composition suivante :

50 T de résines alkydes solubles à l'eau (à 50 % dans l'eau)
2 T d'adjuvant (siccatifs, agent stabilisateur par exemple)
8 T d'eau désionisée
40 T de mélange de pigment 1 soumis à un traitement ultérieur,

le mélange 1 se composant de :

50 T de sulfate de baryum
7 T de mica
14 T de métaphosphate de baryum
29 T d'huile de lin.

8. Enduit selon une quelconque des revendications 1 à 6, caractérisé par la composition suivante :

60 T de résine émulsifiable à l'eau (à 70 % dans l'eau)
4 T de solvant organique (Proponal 2 par exemple)
2 T d'adjuvant (agent stabilisateur par exemple)
10 T d'eau désionisée
24 T de mélange de pigment 2 soumis à un traitement ultérieur,

le mélange 2 se composant de :

22 T de mica
4 T de carbonate de calcium (type calcite)
14 T de phosphate de zinc
60 T de phtalate de butyle.

9. Enduit selon une quelconque des revendications 1 à 6, caractérisé par la composition suivante :

40 T d'une dispersion de styrol-acrylate (à 50 % dans l'eau)
2 T d'adjuvant (agent stabilisateur par exemple)
10 T d'eau désionisée
48 T de mélange de pigment 3 soumis à un traitement ultérieur

le mélange 3 se composant de :

14 T de sulfate de baryum
50 T de poudre de quartz
8 T de métaphosphate de baryum
18 T de paraffine chlorurée
10 T de solvant organique (xylol par exemple).

10. Utilisation de l'enduit suivant une quelconque des revendications 1 à 9 comme revêtement transparent, anticorrosif et à séchage rapide, appliqué sur l'acier.

11. Utilisation de l'enduit suivant une quelconque des revendications 1 à 9 comme revêtement transparent, anticorrosif et à séchage rapide, appliqué sur des métaux non ferreux, tels que le zinc et l'aluminium.

12. Méthode de préparation d'enduits à base aqueuse à des fins anticorrosives, dans laquelle les pigments sont dispersés dans des émulsions, dispersions ou solutions servant de liants filmogènes, caractérisée en ce qu'un mélange de pigments minéral est obtenu avec des pourcentages respectivement supérieur et inférieur à 50 % de composés accélérant la vitesse de séchage d'une part, garantissant la protection anticorrosion d'autre part, les deux types précités activant la transparence, ce mélange étant par ailleurs traité par des substances liquides avant sa dispersion dans le liant, de manière à ce que les pigments reçoivent un enrobage organique.

13. Méthode selon la revendication 12, caractérisée en ce que les substances utilisées pour l'enrobage des pigments sont liquides à la température ambiante, liquéfiées par addition de solvants ou par apport de chaleur.